# EUROPEAN PATENT APPLICATION

(11) **EP 1 755 032 A2**
(43) Date of publication of application: **21.02.2007**
(21) Application number: 06118550.0
(22) Date of filing: 07.08.2006
(51) Int. Cl.: G06F 3/16

(54) **Apparatus for outputting an audio signal for use with a display**

(30) Priority: 12.08.2005 KR 20050074309
(71) Applicant: Samsung Electronics Co., Ltd., Suwon-si, Gyeonggi-Do (KR)
(72) Inventor: LEE, Jang-woo, Seoul (KR)
(74) Representative: Read, Matthew Charles

(57) **Abstract**

A display apparatus includes a display unit to display an image, a sound output part to output a sound, a computer signal processing module to process a video signal and an audio signal input from a computer, a network signal processing module in communication with a network to process a video signal and an audio signal input from the network according to a predetermined protocol, and a controller to display one of the computer and network video signals received from the computer signal processing module and the network signal processing module, respectively, and to output the audio signal that corresponds to the displayed video signal through the sound output part when the audio signal that corresponds to the displayed video signal exists. Accordingly, the display apparatus is capable of outputting an appropriate audio signal that corresponds to an image input from the computer or the network.

## Description

The present invention relates to an apparatus for use with a display, and more particularly, to an apparatus that outputs an audio signal that corresponds to an image displayed on a display unit.

In general, a monitor is connected to a computer, such as a personal computer (PC) or the like, to process and display a video signal input from the computer. There are various types of monitors including, for example, a cathode ray tube (CRT), a liquid crystal display (LCD), or the like.

Recently, the monitor and the computer have been connected to each other through a D-sub connector or a DVI connector, and the video signal is accordingly transferred from the computer to the monitor. An S-video connector, a component connector, or a composite connector may also be provided with the monitor so that the monitor can receive the video signal from an external image apparatus, such as a DVD player, a VCR, or the like.

Additionally, an exchange of data can be executed between the computer and the monitor. For example, the monitor may provide information to the computer through a DDC communication line designated by a Video Electronics Standard Association (VESA). The computer may also provide a predetermined control signal to the monitor through the DDC communication line.

Furthermore, the monitor may receive and display an image by receiving the data from a network. In a monitor which processes information from various sources, it is desirable to provide a convenient manner to reproduce an audio signal that corresponds to the displayed image when the image is displayed by the monitor.

In particular, since audio signal processing methods of data received from the network may be different from processing methods of data from the PC, it is necessary to select an output of the appropriate audio signal.

Accordingly, an embodiment of the present invention provides a display apparatus capable of outputting an appropriate audio signal that corresponds to an image input from a computer or a network, and a control method thereof.

The foregoing and/or other aspects of the present invention can be achieved by providing a display apparatus comprising a display unit to display an image, a sound output part to output a sound, a computer signal processing module to process a first video signal and/or a first audio signal input from a computer, a network signal processing module in communication with a network to process a second video signal and/or a second audio signal input from the network according to a predetermined protocol, and a controller to display one of the first and second video signals received from the computer signal processing module and the network signal processing module, respectively, through the display unit and to output at least one of the first and second audio signals that corresponds to the displayed one of the first and second video signals through the sound output part when the one of the audio signals that corresponds to the displayed one of the first and second video signals exists.

The controller may comprise an audio signal switching part to switch one of the first and second audio signals output from the computer signal processing module and the network signal processing module, respectively, to be output to the sound output part.

At least one of the first and second video signals and the first and second audio signals may be an analog video or audio signal, and the controller may comprise an ADC converter to convert the analog video signal to a digital video signal, a scaler to change a resolution of an image provided by the ADC converter from the digital video signal, and a microcomputer to control the ADC converter and the scaler to display the one of the first and second video signals on the display unit as the image and to control the audio signal switching part to output the one of the audio signals that corresponds to the one of the first and second video signals displayed on the display unit.

The display apparatus may further comprise a source selection part to select one of the first and second video signals input from the computer and the network, respectively, to be displayed on the display unit, wherein if the second video signal input from the network is selected to be displayed on the display unit by an operation of the source selection part, the microcomputer applies a control signal to the audio signal switching part so that the second audio signal input from the network signal processing module is output to the sound output part.

The network signal processing module may comprise a network interface part in communication with the network, a data divider to divide the second video signal and the second audio signal among signals input from the network interface part, a video converter to convert the second video signal divided by the data divider into a third video signal capable of being processed by the controller, an audio converter to convert the second audio signal divided by the data divider into a third audio signal capable of being processed by the sound output part.

The audio converter may comprise an audio codec to convert the second audio signal divided by the data divider into the audio signal capable of being processed by the sound output part.

The foregoing and/or other aspects of the present invention may also be achieved by providing a display apparatus having a display unit that displays video signals, the apparatus comprising a network signal processing module to receive a first video signal and a first audio signal from a network, a PC signal processing module to receive a second video signal and a second audio signal from an external computer, and a controller to automatically select the first audio signal when the first video signal is displayed on the display unit, and select the second audio signal when the second video signal is displayed on the display unit.

The foregoing and/or other aspects of the present invention may also be achieved by providing a display apparatus having a display unit that displays video signals, the apparatus comprising a network signal processing module to receive a first signal having a first video signal without a first audio signal, a PC signal processing module to receive a second signal having a second video signal and a second audio signal, and a controller to automatically select the second audio signal when either one of the first and second video signals are displayed on the display unit.

The foregoing and/or other aspects of the present invention may also be achieved by providing a display apparatus having a display unit that displays video signals, the apparatus comprising a network signal processing module to receive a first signal having a first video signal and a first audio signal, a PC signal processing module to receive a second signal having a second video signal without a second audio signal, and a controller to automatically select the first audio signal when either one of the first video signal and the second video signal are displayed on the display unit.

The foregoing and/or other aspects of the present invention may also be achieved by providing a display apparatus having a display unit that displays video signals, the apparatus comprising a network signal processing module to receive a first video signal, a PC signal processing module to receive a second video signal, and a controller that does not select an output audio signal when either one of the first video signal and the second video signal are displayed on the display unit.

The foregoing and/or other aspects of the present invention may also be achieved by providing a computer readable medium containing executable code to control a display apparatus, the medium including an executable code to receive a network input signal having at least a network video signal from a network, an executable code to receive a computer input signal having at least a computer video signal from a computer, and an executable code to select an audio signal to be output based on which of the network and computer video signals is selected to display on the apparatus.

Embodiments of the present invention will now be described, by way of example, with reference to the accompanying drawings, in which:
Figure 1 illustrates a connection state of a display apparatus according to an embodiment of the present invention;
Figure 2 is a schematic control block diagram of the display apparatus.

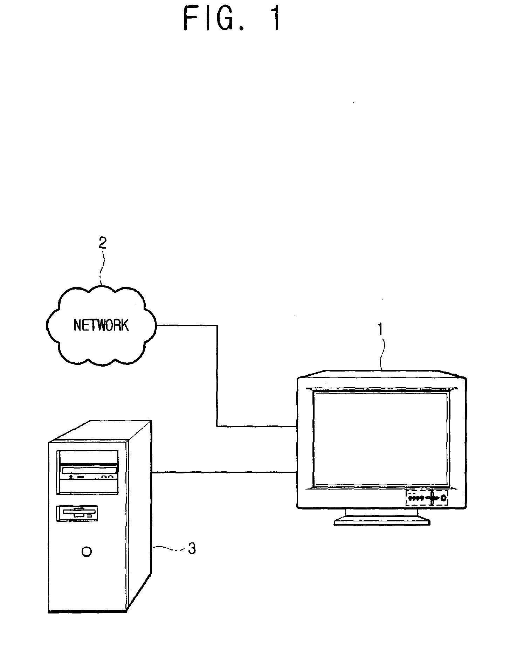

Figure 1 illustrates a configuration of a connection state of a display apparatus 1 according to an embodiment of the present invention. The display apparatus 1 is connected to (or in communication with) a personal computer (PC) 3, as an example of a computer, and a network 2, individually through a wired/wireless communication. A D-Sub connector or a DVI connector may be provided to connect the display apparatus 1 to the PC 3, and a LAN port may be provided to connect the display apparatus 1 to the network 2.

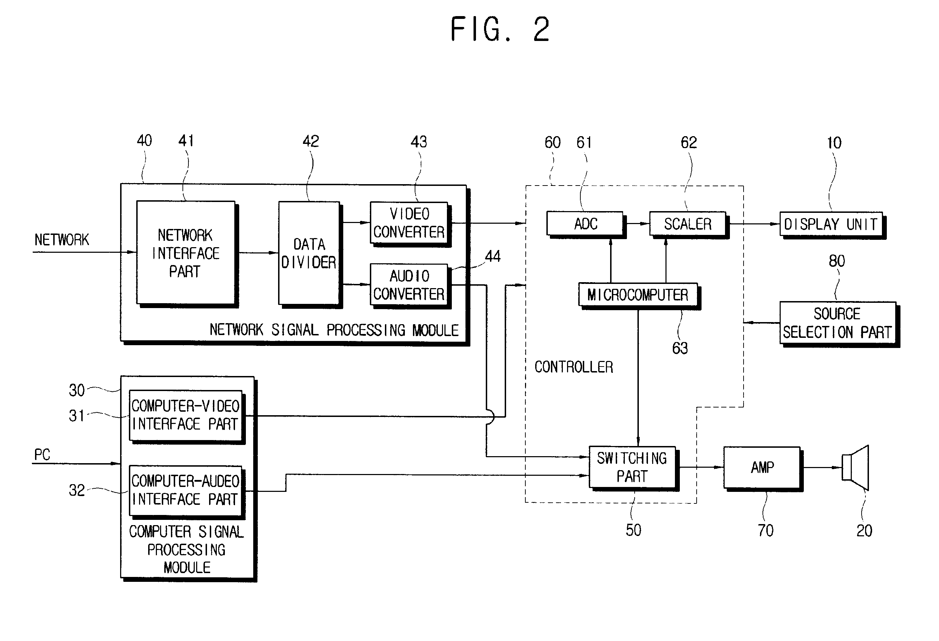

Figure 2 is a schematic control block diagram of the display apparatus 1. The display apparatus 1 comprises a display unit 10, a sound output part 20, a PC signal processing module 30, a network signal processing module 40, an audio switching part 50, and a controller 60.

The display unit 10 displays a predetermined image. The display unit 10 may include a variety of display apparatuses, such as a CRT (cathode ray tube), an LCD (liquid crystal display), a PDP (plasma display panel), or the like. In an embodiment, the display unit 10 is assumed to be an LCD.

The sound output part 20 outputs an audio signal, and may be provided as a small speaker on a lateral side or a front part of the display apparatus 1. Alternatively, the sound output part 20 may be a separate speaker. In the description that follows, the sound output part 20 is assumed to be a speaker.

The PC signal processing module 30 processes a first video signal and a first audio signal input from the PC 3. The PC signal processing module 30 may comprise a PC-video interface part 31 to receive the first video signal from the PC 3 and a PC-audio interface part 32 to receive the first audio signal from the PC 3. The PC-video interface part 31 may be at least one of DVI, D-Sub, S-video, component, and composite connectors, and the PC-audio interface part 32 may be a port connected to an external sound output terminal of the PC 3. Also, the PC signal processing module 30 may output a first representative signal to the controller 60 to inform the controller 60 of whether the first audio signal that corresponds to the first video signal is input from the PC 3. The first representative signal may be provided to the controller 60 by request by the controller 60, or voluntarily.

The network signal processing module 40 is connected to (or in communication with) the network 2 and processes the first video signal and the first audio signal input from the network 2 according to a predetermined protocol.

The network signal processing module 40 may comprise a network interface part 41 to connect to the network 2. Also, the network signal processing module 40 may comprise a data divider 42, a video converter 43, and an audio converter 44. The data divider 42 divides an input signal input from the network interface part 41 into a second video signal and a second audio signal. The video converter 43 converts the second video signal divided by the data divider 42 to a third video signal capable of being processed by the controller 60.In other words, the video converter 43 decodes the second video signal from the data divider 42. Also, the video converter 43 converts the decoded second video signal to the third video signal of the format capable of being processed by the controller 60 and provides the video signal to the controller 60 in the converted format.

For example, the video converter 43 supports a decoding function of a Motion Picture Experts Group-2 (MPEG-2) to decode the video data coded with the MPEG-2 and outputs the decoded video data as the fourth video signal. Here, the second video signal and the third video signal may be collectively called the second video signal.

Also, the video converter 43 may output a variety of formats of the third video signal according to the aforementioned configuration of the display unit 10. For example, when the display unit 10 is provided as the LCD, the video converter 43 supports an LVDS (low voltage differential signalling) encoding function and thereby converts the decoded video signal into an LVDS signal. Accordingly, the LVDS signal may be provided through an LCD module (not shown), or the like, to drive the LCD. Also, the video converter 43 may output an analog RGB signal or a digital RGB signal, and the output RGB signal is provided to a signal processing part of the display unit 10, and/or a scaler 62, respectively.

The audio converter 44 decodes the second audio signal divided by the data divider 42 into a third audio signal which can be processed in the sound output part 20. For example, the audio converter 44 may decode audio data of the MPEG-2 or an AC-3 formats. When the sound output part 20 is the speaker, the audio converter 44 supports a D/A converting function, which converts the decoded second audio signal into an analog audio signal and then outputs the analog audio signal through the speaker. The audio converter 44 may comprise an audio codec to decode the audio data.

Also, the network signal processing module 40 may output the audio signal existing signal to inform the controller 60 of whether the second audio signal that corresponds to the second video signal input from the network 2 is also input (i.e., exists) according to a request by the controller 60, or voluntarily. Here, the network signal processing module 40 may determine whether the second audio signal is input through a process performed by the data divider 42 in which the second video signal and the second audio signal are divided.

The display apparatus 1 according to the present embodiment may comprise an embedded Operating System (OS) such as WinCE, a conventional RTOS and embedded Linux, etc to perform the above-described functions of the data divider 42, the video converter 43, and the audio converter 44. The embedded OS enables the display apparatus 1 to communicate with the network 2 according to the predetermined protocol. The embedded OS may comprise at least a configuration which is used to convert the video signal and the audio signal.

Specifically, if power is supplied to the display apparatus 1, thereby initializing the display apparatus 1, a booting operation is performed by the embedded OS to prepare the display apparatus 1 to process the signal input from the network 2 to the display apparatus 1. In this case, the booting operation may be displayed on a screen of the display unit 10 according to a selection of the video signal displayed thereon. In other words, if the second video signal from the network 2 is displayed, the display unit 10 displays a message of an initializing process following the booting operation, for example. If the first video signal from the PC 3 is displayed, the display unit 10 does not display a message of the initializing process following the booting operation, for example.

The controller 60 selects one of the first and second video signals received from the PC signal processing module 30 and the network signal processing module 40 and displays the selected video signal on the display unit 10. Also, the controller 60 outputs one of the first and second audio signals that corresponds to the displayed video signal through the sound output part 20 when the audio signal that corresponds to the displayed video signal exists as indicated by the audio signal existing signal.

The controller 60 comprises an audio switching part 50. The audio switching part 50 may be a switching part that is included in the controller 60, or may be separate from the controller 60.

The audio signal switching part 50 switches to select one of the first audio signal output from the PC signal processing module 30 and the second audio signal output from the network signal processing module 40, and the switching part 50 provides the selected audio signal to an amplifier (AMP) 70 be output through the sound output part 20. For example, when the first and second audio signals are input from both the PC 3 and the network 2, the audio signal switching part 50 switches to select one of the first and second audio signals and to output the selected audio signal through the sound output part 20. Here, the audio signal switching part 50 may be a single chip to perform a switching operation, a transistor, or the like to perform the switching operation.

The controller 60 displays one of the first and second video signals received from the PC signal processing module 30 and the network signal processing module 40 on the display unit 10. Also, the controller 60 controls the audio signal switching part 50 so that the audio signal that corresponds to the displayed video signal is output through the sound output part 20 when the audio signal that corresponds to the displayed video signal exists. The controller 60 comprises an Analog/Digital converter (ADC) 61 to convert an analog video signal into a digital video signal, the scaler 62 to change a resolution of an image that passes through the ADC 61, and a microcomputer 63 to control the ADC 61 and the scaler 62 to display the image on the display unit 10. Also, the microcomputer 63 controls the audio signal switching part 50 to select the audio signal that corresponds to the video signal displayed on the display unit 10 and to output the selected audio signal through the sound output part 20. In addition, the microcomputer 63 may control an operation of the ADC 61 and the scaler 62.

When the second video signal input from the network 2 and converted by the video converter 43 is a digital signal, it is possible that the microcomputer 63 controls the video signal to be displayed on the display unit 10 without providing the video signal to the ADC 61. That is, if the second or third video signal is the digital signal, the digital signal can be transmitted to the scaler 62 or the display unit 10 not through the ADC 61.

In other words, when the input video signal is an analog signal, the microcomputer 63 controls the ADC 61 to convert the video signal into the digital signal. Also, the microcomputer 63 may control the scaler 62 to adjust the resolution of the image displayed on the display unit 10. The scaler 62 may comprise a predetermined filtrating function, such as a function that removes noise from the image, an outline compensation function, or the like.

The microcomputer 63 determines whether the image displayed on the display unit 10 is input from the PC 3 or the network 2. If the first video signal input from the PC 3 is displayed on the display unit 10 as an image, the microcomputer 63 determines whether the first audio signal from the PC 3 exists and controls the audio signal switching part 50 so that the first audio signal input from the PC 3 is output to the sound output part 20 (i.e., the speaker) when the first audio signal from the PC 3 exists. In the same manner, if the microcomputer 63 determines that the first video signal input from the network 2 is displayed on the display unit 10 as the image, the microcomputer 63 determines whether the first audio signal from the network 2 exists and controls the first audio signal switching part 50 so that the audio signal input from the network 2 is output to the sound output part 20 (i.e., the speaker) when the audio signal from the network 2 exists.

The audio signal that passes through the audio signal switching part 50 is amplified through the amplifier (AMP) 70 and may then be output through the sound output part 20 (i.e., the speaker).

When the first video signal input from the PC 3 is displayed on the display unit 10, the microcomputer 63 may determine whether the audio signal that corresponds to the video signal input from the PC 3 exists based on the first representative signal (a PC audio representative signal) input from the PC signal processing module 30. Also, when the second video signal input from the network 2 is displayed on the display unit 10, the microcomputer 63 may determine whether the audio signal that corresponds to the first video signal input from the network 2 exists based on a second representative signal (a network audio representative signal) input from the network signal processing module 40.

Although not illustrated in Figure 2, the display apparatus 1 according to the present embodiment may further comprise a user switching select part (not shown) to control the audio signal switching part 50 according to a user's selection. Accordingly, the audio signal switching part 50 may be controlled by the user switching select part, regardless of the control of the microcomputer 63. For example, as the audio signal switching part 50 is controlled by the user switching select part, the display apparatus 1 displays the video signal input from the PC 3 on the display unit 10 and outputs an audio signal input from the network 2 to the sound output part 20. In another example, the display apparatus 1 displays the video signal input from the network 2 on the display unit 10 and outputs the audio signal input from PC 3 to the sound output part 20.

Also, when the second audio signal input from the PC 3 does not exist and the second video signal input from the PC 3 is displayed on the display unit 10, the microcomputer 63 may control the audio signal switching part 50 so that the first audio signal input from the network 2 is output to the sound output part 20. Alternatively, when the first audio signal input from the network 2 does not exist and the first video signal input from network 2 is displayed on the display unit 10, the microcomputer 63 may control the audio signal switching part 50 so that the second audio signal input from the PC 3 is output to the sound output part 20.

On the other hand, the display apparatus 1 according to the present embodiment may comprise a source selection part 80 to select one of the first and second video signals input from the PC 3 and the network 2 to be displayed on the display unit 10 as an image.

In other words, the first or second video signal input from the network 2 or the PC 3 may be displayed according to an operation of the source selection part 80. The source selection part 80 may be operated by a user. The microcomputer 63 controls the display unit 10 to display either one of the signals input from the network 2 or the PC 3 according to the operation of the source selection part 80 and controls the audio signal switching part 50 so that the audio signal is output to the sound output part 20 (i.e., the speaker) based on the displayed video signal.

Accordingly, a sound that corresponds to the image displayed on the display unit 10 is output through the speaker provided with the display apparatus 1 according to the embodiments of the present invention. As a result, convenience of a user is enhanced.

The present invention can also be embodied as computer readable code on a computer readable recording medium. The computer readable recording medium may be any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, code, and code segments for accomplishing embodiments of the present invention can be construed by programmers skilled in the art to which the present invention pertains.

As described above, according to the various embodiments of the present invention, one of a plurality of video signals input from a network or a PC is displayed on a display part and an audio signal that corresponds to the video signal displayed on the display part is output to the sound output part so that a user can hear the audio signal that corresponds to the video signal through a speaker provided with a display apparatus, while viewing the video signal displayed on the display unit.

Although a few embodiments of the present invention have been shown and described, it will be appreciated by those skilled in the art that changes may be made in these embodiments without departing from the principles of the general invention, the scope of which is defined in the appended claims and their equivalents.

## Claims

1. A display apparatus comprising:
a display unit (10) to display an image;
sound output means (20, 70) to output a sound;
a computer signal processing module (30) to process a first video signal and/or a first audio signal input from a computer;
a network signal processing module (40) in communication with a network to process a second video signal and/or a second audio signal input from the network according to a predetermined protocol; and
a controller (60) to display one of the first and second video signals received from the computer signal processing module (30) and the network signal processing module (40), respectively, through the display unit (10) and to output one of the audio signals that corresponds to the displayed one of the first and second video signals through the sound output means (20, 70) when the audio signal that corresponds to the displayed video signal exists.

2. The display apparatus according to claim 1, wherein the controller (60) comprises an audio signal switching means (50) to switch one of the first and second audio signals output from the computer signal processing module (30) and the network signal processing module (40), respectively, to be output to the sound output means (20, 70).

3. The display apparatus according to claim 2, wherein at least one the first and second video signals and the first and second audio signals is an analog video signal and an analog audio signal, and the controller (60) comprises:
an ADC converter (61) to convert the analog video signal to a digital video signal;
a scaler (62) to change a resolution of an image corresponding to the digital video signal provided by the ADC converter (61); and
a microcomputer (63) to control the ADC converter (61) and the scaler (62) to display the converted video signal on the display unit (10) as the image and to control the audio signal switching means (50) to output the audio signal that corresponds to the video signal displayed on the display unit (10).

4. The display apparatus according to claim 3, further comprising:
a source selection means (80) to select one of the first and second video signals input from the computer and the network, respectively, to be displayed on the display unit (10),
wherein if the second video signal input from the network is selected to be displayed on the display unit (10) by an operation of the source selection means (80), the microcomputer (63) is arranged to apply a control signal to the audio signal switching means (50) so that the second audio signal input from the network signal processing module (40) is output to the sound output means (20, 70).

5. The display apparatus according to any one of claims 2 to 4, wherein the network signal processing module (40) comprises:
a network interface means (41) in communication with the network;
a data divider (42) for dividing the second video signal and the second audio signal from signals input from the network interface means (41);
a video converter (43) for converting the second video signal divided by the data divider (42) into a video signal capable of being processed by the controller (40); and
an audio converter (44) to convert the second audio signal divided by the data divider (42) into an audio signal capable of being processed by the sound output means (20, 70).

6. The display apparatus according to claim 5, wherein the audio converter (44) comprises an audio codec to convert the audio signal divided by the data divider (42) into another audio signal capable of being processed by the sound output means (20, 70).

7. An apparatus for outputting video signals for display on a display unit (10), the apparatus comprising:
a network signal processing module (40) for receiving a first video signal and a first audio signal from a network;
a computer signal processing module (30) for receiving a second video signal and a second audio signal from an external computer; and
a controller (60) for selecting a received audio signal for output with a video signal arranged to be displayed on the display unit (10).

8. An apparatus according to claim 7, in which the controller (60) is arranged to select the first audio signal for output when the first video signal is arranged to be displayed on the display unit (10) and to select the second audio signal for output when the second video signal is arranged to be displayed on the display unit (10).

9. An apparatus according to claim 7, in which the controller (60) is arranged to select the first audio signal for output when either one of the first and second video signals is arranged to be displayed on the display unit (10) when no second audio signal is received by the computer signal processing module (30).

10. An apparatus according to claim 7, in which the controller (60) is arranged to select the second audio signal for output when either one of the first and second video signals is arranged to be displayed on the display unit (10) when no first audio signal is received by the network signal processing module (40).

11. The apparatus according to claim 8, further comprising:
a source selection means (80) for selecting one of the first and second video signals; and
a switching means for (50) receiving signals indicating that both first and second audio signals have been received and for selecting one of the first and second audio signals that corresponds to the one of the first and second video signals for display.

12. The apparatus according to claim 9, further comprising:
a source selection means (80) for selecting one of the first and second video signals; and
a switching means (50) for receiving a signal indicating that a first audio signal has been received and that a second audio signal has not been received, and to select the first audio signal for output.

13. The apparatus according to claim 10, further comprising:
a source selection means (80) to select one of the first and second video signals; and
a switching means (50) for receiving a signal indicating that a second audio signal has been received and that a first audio signal has not been received, and to select the second audio signal for output.

14. The apparatus according to any one of claims 8, 9, 11 or 12, wherein the network signal processing module (40) comprises a converting means (43, 44) for converting characteristics of the first video signal and the first audio signal from a network format to a general characteristic format capable of being output by the apparatus.

15. The apparatus according to claim 10 or claim 13, wherein the network signal processing module comprises (40) a converter means (43) for converting characteristics of the first video signal from a network format to a general characteristic format capable of being output by the apparatus.

16. The apparatus according to claim 14 or claim 15, wherein the network format comprises one of MPEG-2 format and AC-3 format.

17. A computer readable medium containing executable instructions for causing an apparatus according to any preceding claim to:
receive a network input signal having at least a network video signal from a network;
receive a computer input signal having at least a computer video signal from a computer; and
select an audio signal to be output based on which of the network and computer video signals is selected to displayed.

18. A display apparatus having a display unit (10), arranged to select and display a video signal from among first and second video signals received from a first source and a second source respectively, the display apparatus further arranged to receive an audio signal from at least one of said first and second sources, and configured to select and output an audio signal when one of said video signals is displayed on the display unit (10).

19. A display apparatus according to claim 18 configured to select an audio signal for output in accordance with the video signal selected for display on the display unit (10).

20. A method of controlling a display apparatus configured to select and display a video signal from among first and second video signals received from a first source and a second source respectively, comprising:
receiving an audio signal from at least one of said first and second sources; and
selecting and outputting an audio signal when one of said video signals is displayed by the display apparatus.

21. A method according to claim 21 in which the audio signal is selected for output in accordance with the video signal displayed on the display apparatus.

22. A computer program comprising computer-executable instructions for enabling the method of claim 20 or 21 to be performed when run on a processor arranged to control the display apparatus.
